# EUROPEAN PATENT APPLICATION

(11) **EP 1 931 135 A1**
(43) Date of publication of application: **11.06.2008**
(21) Application number: 07122227.7
(22) Date of filing: 04.12.2007
(51) Int. Cl.: H04N 5/232, G02B 27/64, G03B 17/17

(54) **Apparatus and method for correcting shake of image photographing device**

(30) Priority: 04.12.2006 KR 20060121741
(71) Applicant: Samsung Electronics Co., Ltd., Suwon-si, Gyeonggi-Do (KR)
(72) Inventor: Cho, Woo-jong, Mt.14-1, Nongseo-dong, Giheung-gu Yongin-si Gyeonggi-do (KR); Choi, Mun-cheol, Mt.14-1, Nongseo-dong, Giheung-gu Yongin-si Gyeonggi-do (KR); Choi, Sang-on, Mt.14-1, Nongseo-dong, Giheung-gu Yongin-si Gyeonggi-do (KR); Lee, Seong-deok, Mt.14-1, Nongseo-dong, Giheung-gu Yongin-si Gyeonggi-do (KR)
(74) Representative: Grünecker, Kinkeldey, Stockmair & Schwanhäusser Anwaltssozietät

(57) **Abstract**

Provided is an apparatus and a method for correcting a shake of an image photographing device, which enables miniaturization and thin-shaping of the image photographing device, and yet can implement an anti-shake function. This apparatus includes a shake sensing unit sensing the shake of the image photographing device which photographs an image of a subject, a first optical path changing unit changing an optical path of light incident to the image photographing device, an angle adjusting unit adjusting an angle of an light-incident surface of the first optical path changing unit according to the sensed shake, and an image generating unit generating the image of the subject through the light, the optical path of which has been changed by the first optical path changing unit.

## Description

### CROSS-REFERENCE TO RELATED APPLICATION

This application claims priority from Korean Patent Application No. 10-2006-0121741 filed on December 4, 2006 in the Korean Intellectual Property Office, the disclosure of which is incorporated herein by reference in its entirety.

### BACKGROUND OF THE INVENTION

### Field of the Invention

The present invention relates generally to an apparatus and a method for correcting a shake of an image photographing device, and more particularly to an apparatus and a method for correcting a shake of an image photographing device, which enables miniaturization and thin-shaping of the image photographing device, and yet can implement an anti-shake function.

### Description of the Prior Art

With an increasing demand from consumers, a camera, such as a digital camera, a camera module for mounting on a portable appliance (e.g., a cellular phone), etc., has been more and more miniaturized and thinned over recent years, and its performance has also been improved by leaps and bounds.

A camera continues to advance in optical performance to the extent that it has recently been equipped with an auto focusing function, and introducing a zoom lens becomes an important issue for enhancing the performance of a camera. Therefore, it is required to correct a shake occurring according to the introduction of a high magnification zoom.

An optical image stabilizer (OIS), an electrical image stabilizer (EIS) and a digital image stabilizer (DIS) are mainly used for correcting such a shake. Of them, the OIS has the best shake correction performance and is less affected by various limitations on performance.

This OIS may be classified into an active prism type, a lens shift type and a sensor movement type, but every type of OIS has a problem in that when it is employed in a camera, a camera barrel becomes complex in structure and large in size. Thus, dissimilar to a digital camera, there are many difficulties in applying the OIS to a camera module for mounting on a portable appliance where importance is attached to miniaturization and thin-shaping of the camera module, rather than shake correction.

For example, the active prism type OIS is accompanied with an increase in thickness, caused by the addition of an active prism, the lens shift type OIS is accompanied with complexity in structure, caused by the addition of a component for shifting a lens, and the sensor movement type OIS is accompanied with an increase in thickness, caused by the addition of a component for moving a sensor.

Therefore, there is a need for a way to allow a shake of a camera module for mounting on a portable appliance to be corrected without increasing the size of the camera module.

Japanese Patent Application Laid-open No. 2005-352240 discloses a camera optical system, in which an optical path dividing means is provided, an object to be photographed is incident to a finder optical system after reflected twice, and a camera shake is corrected by changing the tilt angle of one mirror. However, there is still no way to allow a shake of a camera module for mounting on a portable appliance to be corrected without increasing the size of the camera module.

### SUMMARY OF THE INVENTION

Accordingly, the present invention has been made to solve the above-mentioned problems occurring in the prior art, and an object of the present invention is to provide an apparatus and a method for correcting a shake of an image photographing device, which can prevent the thickness of the image photographing device and simultaneously correct a shake of the image photographing device by changing the optical path of light incident to the image photographing device.

It should be noted that objects of the present invention are not limited to that previously mentioned, and other objects not mentioned herein will be apparent to those skilled in the art from the following description.

To accomplish the above-mentioned object of the present invention, in accordance with one aspect of the present invention, there is provided an apparatus for correcting a shake of an image photographing device, the apparatus including: a shake sensing unit sensing the shake of the image photographing device which photographs an image of a subject; a first optical path changing unit changing an optical path of light incident to the image photographing device; an angle adjusting unit adjusting an angle of a light-incident surface of the first optical path changing unit according to the sensed shake; and an image generating unit generating the image of the subject through the light, the optical path of which has been changed by the first optical path changing unit.

In accordance with another aspect of the present invention, there is provided an apparatus for correcting a shake of an image photographing device, the apparatus including: a shake sensing unit sensing the shake of the image photographing device which photographs an image of a subject; a first optical path changing unit changing an optical path of light incident to the image photographing device; an angle adjusting unit adjusting an angle of a light-incident surface of the first optical path changing unit in a first direction according to the sensed shake; and an image generating unit generating the image of the subject by changing a position of an area receiving the light, the optical path of which has been changed by the first optical path changing unit, in a second direction.

In accordance with yet another aspect of the present invention, there is provided an apparatus for correcting a shake of an image photographing device, the apparatus including: a shake sensing unit sensing the shake of the image photographing device which photographs an image of a subject; a first optical path changing unit changing an optical path of light incident to the image photographing device; a second optical path changing unit changing an optical path, to which the optical path of the light has been changed by the first optical path changing unit, once again; and an image generating unit generating the image of the subject through the light, the optical path of which has been changed again by the second optical path changing unit.

In accordance with still yet another aspect of the present invention, there is provided a method of correcting a shake of an image photographing device, the method including: sensing the shake of the image photographing device which photographs an image of a subject; changing an optical path of light incident to the image photographing device; when the optical path of the light is changed, adjusting an angle of an optical path, to which the optical path of the light is changed, according to the sensed shake; and generating the image of the subject through the light, the optical path of which has been changed.

In accordance with still yet another aspect of the present invention, there is provided a method of correcting a shake of an image photographing device, the method including: sensing the shake of the image photographing device which photographs an image of a subject; changing an optical path of light incident to the image photographing device; when the optical path of the light is changed, adjusting an angle of an optical path, to which the optical path of the light is changed, in a first direction according to the sensed shake; and generating the image of the subject by changing a position of an area receiving the light, the optical path of which has been changed, in a second direction.

In accordance with still yet another aspect of the present invention, there is provided a method of correcting a shake of an image photographing device, the method including: sensing the shake of the image photographing device which photographs an image of a subject; changing an optical path of light incident to the image photographing device; changing the changed optical path of the light once again; and generating the image of the subject through the light, the optical path of which has been changed again.

Details about other embodiments of the present invention are included in the following detailed description and the accompanying drawings.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating an apparatus for correcting a shake of an image photographing device in accordance with a first preferred embodiment of the present invention;
FIG. 2 is a schematic view illustrating the apparatus for correcting a shake of an image photographing device in accordance with the first embodiment of the present invention;
FIG. 3 is a schematic view illustrating an apparatus for correcting a shake of an image photographing device in accordance with a second preferred embodiment of the present invention;
FIG. 4 is a block diagram illustrating an apparatus for correcting a shake of an image photographing device in accordance with a third preferred embodiment of the present invention;
FIG. 5 is a schematic view illustrating first and second optical path changing units in the apparatus for correcting a shake of an image photographing device in accordance with the third embodiment of the present invention;
FIG. 6 is a schematic view illustrating the first and second optical path changing units, where an angle of an incident surface of light is adjusted, in the apparatus for correcting a shake of an image photographing device in accordance with the third embodiment of the present invention;
FIG. 7 is a flowchart illustrating a method of correcting a shake of an image photographing device in accordance with the first embodiment of the present invention;
FIG. 8 is a flowchart illustrating a method of correcting a shake of an image photographing device in accordance with the second embodiment of the present invention; and
FIG. 9 is a flowchart illustrating a method of correcting a shake of an image photographing device in accordance with the third embodiment of the present invention.

### DETAILED DESCRIPTION OF THE PREFERRED EMBODIMENTS

Advantages and features of the present invention, and ways to achieve them will be apparent from embodiments of the present invention described with reference to the accompanying drawings in the following. However, the scope of the present invention is not limited to such embodiments and the present invention may be realized in various forms. The embodiments disclosed in the specification are nothing but examples provided to disclose the present invention and assist those skilled in the art to completely understand the present invention. The present invention is defined only by the scope of the appended claims. Also, the same reference numerals are used to designate the same elements throughout the specification and drawings.

Hereinafter, preferred embodiments of the present invention will be described in detail with reference to the accompanying block diagrams and flowcharts for explaining an apparatus and a method for correcting a shake of an image photographing device. Here, it should be understood that combinations of each block and each step of the accompanying block diagrams and flowcharts may be executed by means of computer program instructions. Since such computer program instructions may be loaded into a processor of a general-purpose computer, a special-purpose computer or other programmable data processing equipment, the instructions to be executed through the processor of the computer or other programmable data processing equipment create means for executing the functions described in each block or each step of the block diagrams or the flowcharts. These computer program instructions may be stored in a computer-usable or computer-readable memory, capable of being directed to a computer or other programmable data processing equipment, in order to implement such functions in a specific manner, so it is also possible to produce a system including instruction means for executing the functions described in each block or each step of the block diagrams or the flowcharts by means of the instructions stored in the computer-usable or computer-readable memory. Furthermore, since the computer program instructions may be loaded into a computer or other programmable data processing equipment, it is also possible to provide stages for executing the functions described in each block or each step of the block diagrams or the flowcharts by means of the instructions which operate the computer or other programmable data processing equipment by executing a series of operational stages in the computer or other programmable data processing equipment to generate a computer-executed process.

Also, each block or each step may represent a part of a module, a segment or a code, including one or more executable instructions for executing a specific logical function or specific logical functions. In addition, it should be noted that the functions mentioned in the blocks or steps may occur out of order in several alternative embodiments. For example, two blocks or steps shown in succession may be executed substantially concurrently, or may be executed in reverse order according to corresponding functions.

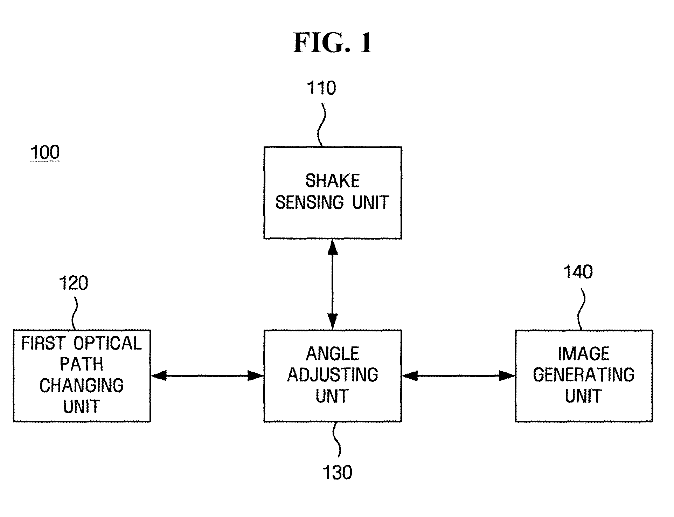

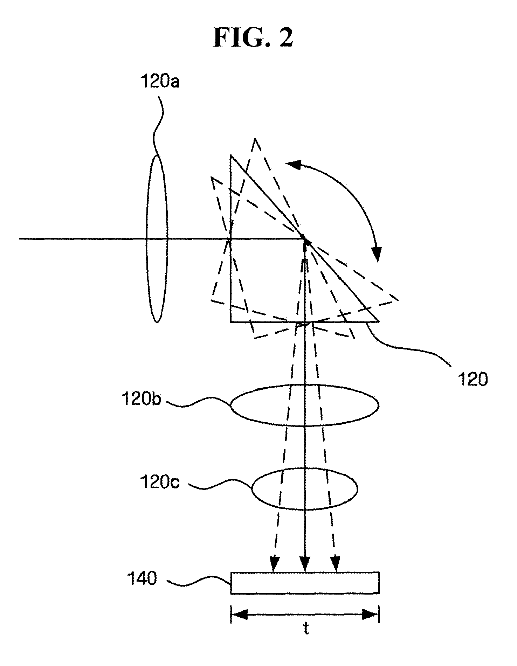

FIG. 1 is a block diagram illustrating an apparatus for correcting a shake of an image photographing device according to a first preferred embodiment of the present invention, and FIG. 2 is a schematic view illustrating the same.

As illustrated in the drawings, the apparatus 100 for correcting a shake of an image photographing device according to the first embodiment of the present invention includes a shake sensing unit 110 sensing a shake of the image photographing device which photographs an image of a given subject, a first optical path changing unit 120 changing an optical path of light incident to the image photographing device, an angle adjusting unit 130 adjusting an angle of a light-incident surface (hereinafter referred to as "incident surface") of the first optical path changing unit 120, and an image generating unit 140 generating the image of the subject through light, the optical path of which has been changed by the first optical path changing unit 120.

Here, the shake sensing unit 110 may include a gyro sensor, an acceleration sensor, a terrestrial magnetism sensor, an image analysis algorithm and so forth which are provided in the image photographing device to sense a shake of a user who uses the image photographing device, but the present invention is not limited thereto. Further, the image photographing device may include a camera, a portable appliance with a camera module, etc., but the present invention is also not limited thereto.

In addition, the first optical path changing unit 120 may be formed of a prism, a mirror and the like, so that it can change an optical path of light incident through an objective 120a. Here, an optical path, to which the optical path of the incident light is changed, can be determined according to an angle of the incident surface, and an angle of the incident surface can be adjusted by the angle adjusting unit 130.

This embodiment of the present invention will be described by exemplifying a case where the angle adjusting unit 130 adjusts an angle of the incident surface in at least one of a first direction and a second direction. By way of example, the first direction will be assumed to be a vertical direction, and the second direction will be assumed to be a horizontal direction. Here, the vertical direction refers to a direction perpendicular to an optical axis incident onto the objective 120a, and the horizontal direction refers to a direction horizontal to the optical axis incident onto the objective 120a. Of course, the premise that the angle adjusting unit 130 adjusts an angle of the incident surface in the vertical and horizontal directions is merely an example for promoting the understanding of the present invention, and a direction in which an angle of the incident surface is adjusted may vary according to the actual environments where the image photographing device is used.

In FIG. 2, it can be understood that an angle of the incident surface of the first optical path changing unit 120 is adjusted in the vertical direction, and the width (t) of the image generating unit 140 corresponds to the thickness of the image photographing device. In other words, the thickness of image photographing devices in most ordinary cameras extends in a direction horizontal to an optical axis incident onto the objective 120a, and light incident through the objective 120a turns to the vertical direction by the first optical path changing unit 120 and reaches the image generating unit 140 in this embodiment of the present invention, by reason of which it can be understood that the width (t) of the image generating unit 140 corresponds to the thickness of the image photographing device.

Accordingly, when an optical path of light incident to the image photographing device is changed as illustrated in FIG. 2, an anti-shake function can be implemented through the first optical path changing unit 120 without increasing the thickness of the image photographing device.

With respect to this, the angle adjusting unit 130 can determine in which direction an angle of the incident surface of the first optical path changing unit 120 is changed, based on a sensing result from the shake sensing unit 110, and can change the optical path of the incident light by adjusting an angle of the incident surface according to a result of the determination.

Changing the optical path of the incident light in this way is aimed at correcting a shake occurring while the incident light, the optical path of which has been changed by the first optical path changing unit 120, passes through a variator 120b and a compensator 120c, and reaches the image generating unit 140 provided with an image sensor. Further, an optical path, to which the optical path of the incident light is changed by the first optical path changing unit 120, may vary according to the size of the image sensor. Further, the positions of the respective lenses 120a, 120b, 120c, as illustrated in FIG. 2, are merely an example for promoting the understanding of the present invention, and may vary according to the type and specification of the image photographing device.

In this embodiment of the present invention, a VCM (Voice Coil Module), a stepping motor, a DC/AC motor, an ultrasonic motor, an organic/plastic driver and so forth may be used as the angle adjusting unit 130, but the present invention is not limited thereto.

In addition, although FIG. 2 illustrates that the first optical path changing unit 120 adjusts an angle of its incident surface in the vertical direction, this is merely an example for promoting the understanding of the present invention, and any type of modification may be made to the direction in which an angle of the incident surface is adjusted.

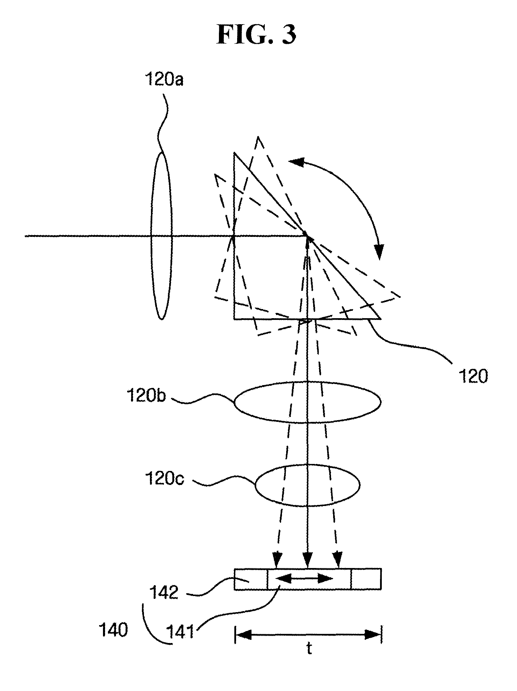

FIG. 3 is a schematic view illustrating an apparatus for correcting a shake of an image photographing device according to a second preferred embodiment of the present invention. Here, the second embodiment of FIG. 3 can be understood as an embodiment where, in the above-mentioned shake correction apparatus of FIGS. 1 and 2, a shake of the image photographing device is corrected in such a manner that the first optical path changing unit 120 changes an optical path in the first direction, and a position of an image sensor included in the image generating unit 140 is changed in the second direction.

As illustrated in the drawing, in this embodiment of the present invention, the first optical path changing unit 120 may be formed of a prism, a mirror and the like, so that it can change an optical path of light incident through an objective 120a. Here, an optical path, to which the optical path of the incident light is changed, can be determined according to an angle of the incident surface, and an angle of the incident surface can be adjusted by the angle adjusting unit 130.

In other words, the angle adjusting unit 130 can adjust an angle of the incident surface, based on the shake sensed by the shake sensing unit 110, and an optical path, to which the optical path of the incident light is changed, can be determined according to the adjusted angle.

The image generating unit 140 may include an image sensor 141 receiving light and a driver 142 changing a position of the image sensor 141.

While the first optical path changing unit 120 corrects a shake by changing an optical path in the first direction, the driver 142 can correct the shake by changing a position of the image sensor 141 in the second direction. In other words, when a shake occurs in the image photographing device, a shake component in the first direction, that is, the vertical direction, can be corrected according to an angle of the incident surface of the first optical path changing unit 120, and a shake component in the second direction, that is, the horizontal direction, can be corrected according to a position of the image sensor 141, which is changed by the driver 142. Of course, the directions in which an angle of the incident surface of the first optical path changing unit 120 and a position of the image sensor 141 in the image generating unit 140 may be reversed to each other.

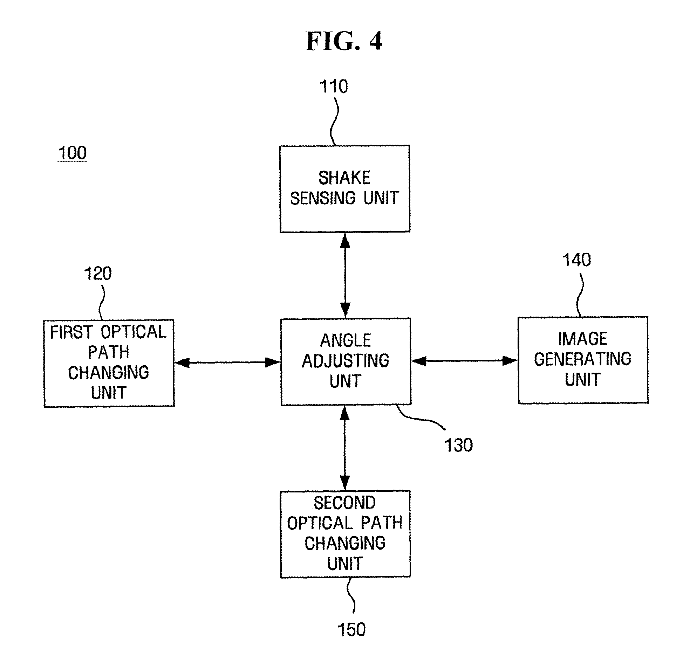

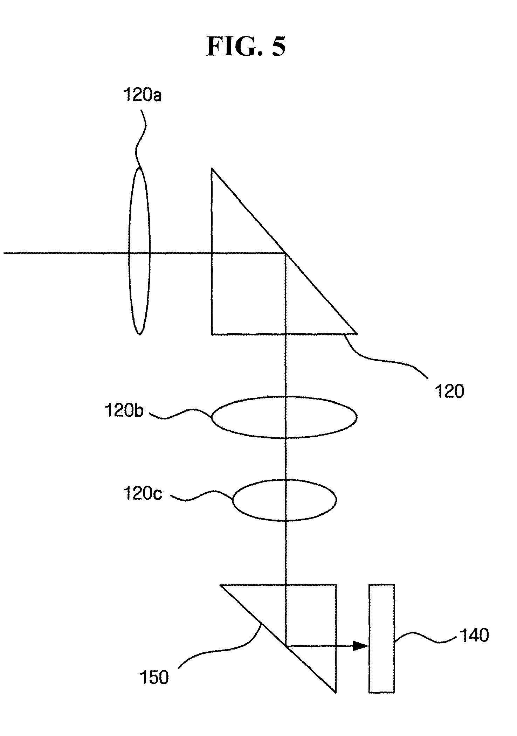

FIG. 4 is a block diagram illustrating an apparatus for correcting a shake of an image photographing device according to a third preferred embodiment of the present invention, and FIG. 5 is a schematic view illustrating the same.

As illustrated in the drawings, the apparatus 100 for correcting a shake of an image photographing device according to the third embodiment of the present invention includes a shake sensing unit 110 sensing a shake of the image photographing device which photographs an image of a given subject, a first optical path changing unit 120 changing an optical path of light incident to the image photographing device, a second optical path changing unit 150 changing an optical path, to which the optical path of the incident light has been changed by the first optical path changing unit 120, once again, and a image generating unit 140 generating the image of the subject through light, the optical path of which has been changed again by the second optical path changing unit 150.

Here, the shake sensing unit 110 may include a gyro sensor, an acceleration sensor, a terrestrial magnetism sensor, an image analysis algorithm and so forth which are provided in the image photographing device to sense a shake of a user who uses the image photographing device, but the present invention is not limited thereto.

The first optical path changing unit 120 changes an optical path of light, which is incident through the objective 120a, in a direction perpendicular to an optical axis incident onto the objective 120a, and the second optical path changing unit 150 changes on optical path, to which the optical path of the incident light has been changed by the first optical path changing unit 120, once again in a direction horizontal to the optical axis incident onto the objective 120a. Thus, a light receiving area, at which light arrives in the image generating unit 140, is positioned in a direction perpendicular to the optical axis incident onto the objective 120a. In this case, that is, when the image generating unit 140 is positioned in a direction perpendicular to the ground in this way, a limitation on increasing the width of the image generating unit 140 is relieved. In contrast with this, when the light receiving area, at which light arrives in the image generating unit 140, is positioned in a direction horizontal to the optical axis incident onto the objective 120a, as described in FIG. 2, there is a significant limitation on increasing the width of the image generating unit 140 because the thickness of the image photographing device, corresponding to the width of the image generating unit 140, increases. Thus, in this embodiment of the present invention, an increase in the thickness of the image photographing device can be prevented even when a driver to be described below is provided in order to change a position of an image sensor included in the image generating unit 140.

In addition, the apparatus 100 for correcting a shake of an image photographing device may include an angle adjusting unit 130 capable of adjusting an angle of an incident surface in the first and second optical path changing units 120, 150, respectively. This angle adjusting unit 130 can adjust an angle of the incident surface of the first optical path changing unit 120 in the first direction, and adjust an angle of the incident surface of the second optical path changing unit 150 in the second direction, according to a sensing result from the shake sensing unit 110. Of course, although this embodiment of the present invention is described by exemplifying a case where the first and second optical path changing units 120, 150 adjust angles of their incident surfaces in different directions, the present invention is not limited thereto. For example, one of the first and second optical path changing units 120, 150 is fixed, and the other adjusts an angle in both the first and second directions, but the present invention is also not limited thereto. Here, as assumed above, the first direction corresponds to a vertical direction, and the second direction corresponds to a horizontal direction.

As mentioned above, in this embodiment of the present invention, a position of the image sensor, which receives light in the image generating unit 140, may be adjusted in order to correct a shake, in addition to adjusting angles of the incident surfaces of the first and second optical path changing units 120, 150. More specially, the image generating unit 140 may include the image sensor 141 and a driver 142 changing a position of the image sensor 141. The driver 142 can correct a shake by changing a position of the image sensor 141 according to a sensing result from the shake sensing unit 110. Here, since the image generating unit 140 is disposed in a direction perpendicular to the optical axis incident onto the objective 120a, an increase in the thickness of the image photographing device can be prevented even when the driver 142 changing a position of the image sensor 141 is provided.

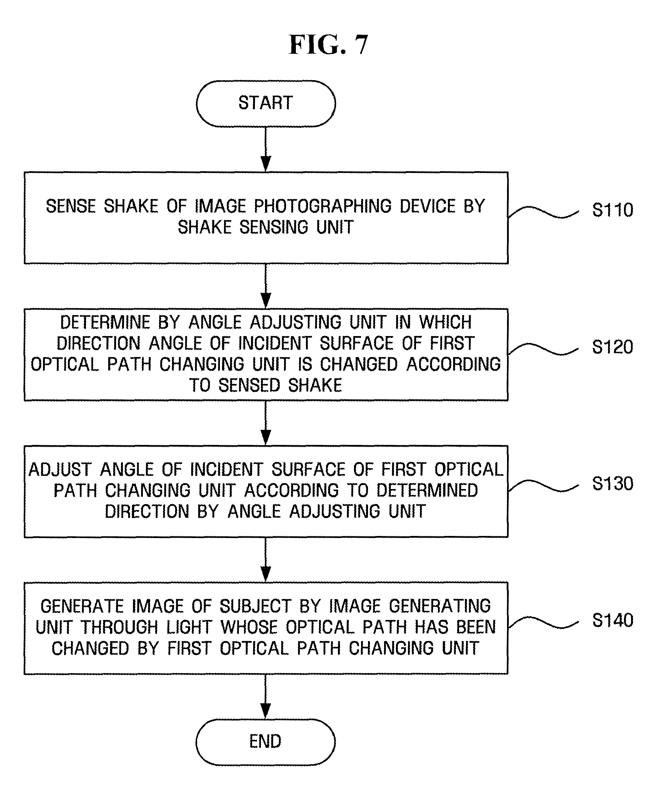

FIG. 7 is a flowchart illustrating a method of correcting a shake of an image photographing device according to the first embodiment of the present invention. Here, this method of FIG. 7 can be understood as a method of operating the apparatus described in FIGS. 1 and 2.

As illustrated in the drawing, the method of correcting a shake of an image photographing device according to the first embodiment of the present invention begins with sensing a shake, occurring in the image photographing device, by the shake sensing unit 110 (S110). Here, as described above, the shake sensing unit 110 includes a gyro sensor, an acceleration sensor, a terrestrial magnetism sensor, an image analysis algorithm and so forth, so that it can sense shake occurrence. According to the shake sensed in the shake sensing unit 110, the angle adjusting unit 130 determines in which direction an angle of the incident surface of the first optical path changing unit 120 is adjusted (S120), and adjusts an angle of the incident surface of the first optical path changing unit 120 in the determined direction (S130). In FIG. 7, the first optical path changing unit 120 may adjust an angle of its incident surface in at least one of the first and second directions. For example, if the first direction corresponds to a direction perpendicular to an optical axis incident onto the objective 120a, and the second direction corresponds to a direction horizontal to the optical axis incident onto the objective 120a, as assumed above, the first optical path changing unit 120 can correct the shake occurring in the image photographing device by adjusting an angle of its incident surface in at least one of the vertical and horizontal directions.

The image generating unit 140 receives light, the optical path of which has been changed by the first optical path changing unit 120, to thereby generate an image of a subject (S140).

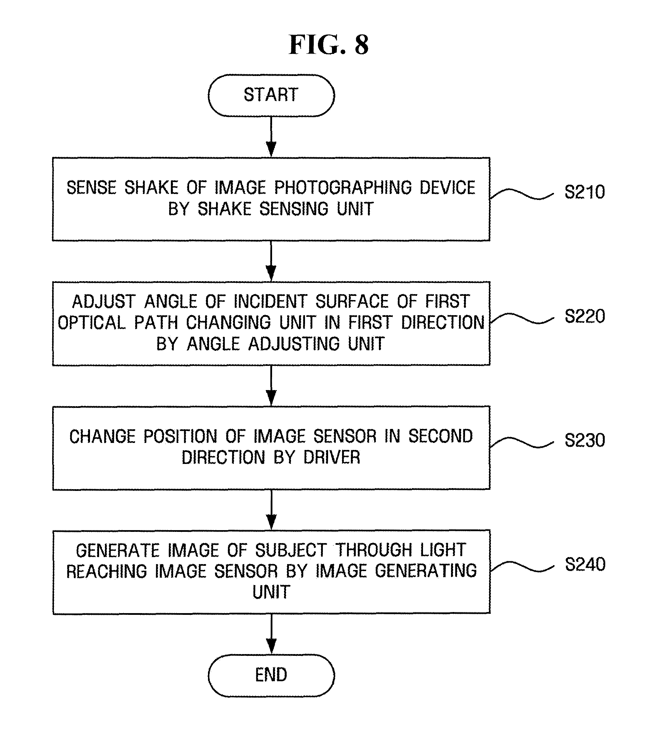

FIG. 8 is a flowchart illustrating a method of correcting a shake of an image photographing device according to the second embodiment of the present invention. Here, this method of FIG. 8 can be understood as a method of operating the apparatus described in FIG. 3.

As illustrated in the drawing, the method of correcting a shake of an image photographing device according to the second embodiment of the present invention begins with sensing a shake, occurring in the image photographing device, by the shake sensing unit 110 (S210). Here, as described above, the shake sensing unit 110 includes a gyro sensor, an acceleration sensor, a terrestrial magnetism sensor, an image analysis algorithm and so forth, so that it can sense shake occurrence. In FIG. 8, by way of example, a description will be given of a case where the shake sensing unit 110 senses both a shake component in the first direction and a shake component in the second direction. Of course, as mentioned above, the first direction corresponds to a direction perpendicular to an optical axis incident onto the objective 120a, and the second direction corresponds to a direction horizontal to the optical axis incident onto the objective 120a. In FIG. 8, by way of example, a description will also be given of a case where the first optical path changing unit 120 corrects the shake component in the first direction, and the image generating unit 140 corrects the shake component in the second direction.

The angle adjusting unit 130 adjusts an angle of the incident surface of the first optical path changing unit 120 in the first direction according to the shake component in the first direction among the shake sensed in the shake sensing unit 110 (S220).

The driver 142 adjusts a position of the image sensor 141 in the second direction according to the shake component in the second direction among the shake sensed in the shake sensing unit 110 (S230).

Thus, if the shake components in the first and second directions are corrected by adjusting an angle of the incident surface of the first optical path changing unit 120 and a position of the image sensor 141, the image generating unit 140 generates an image of a subject through light reaching the image sensor 141 (S240).

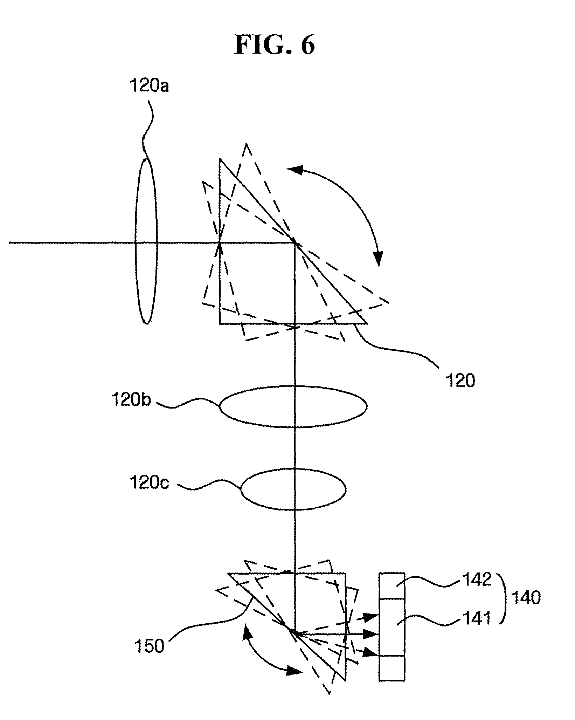

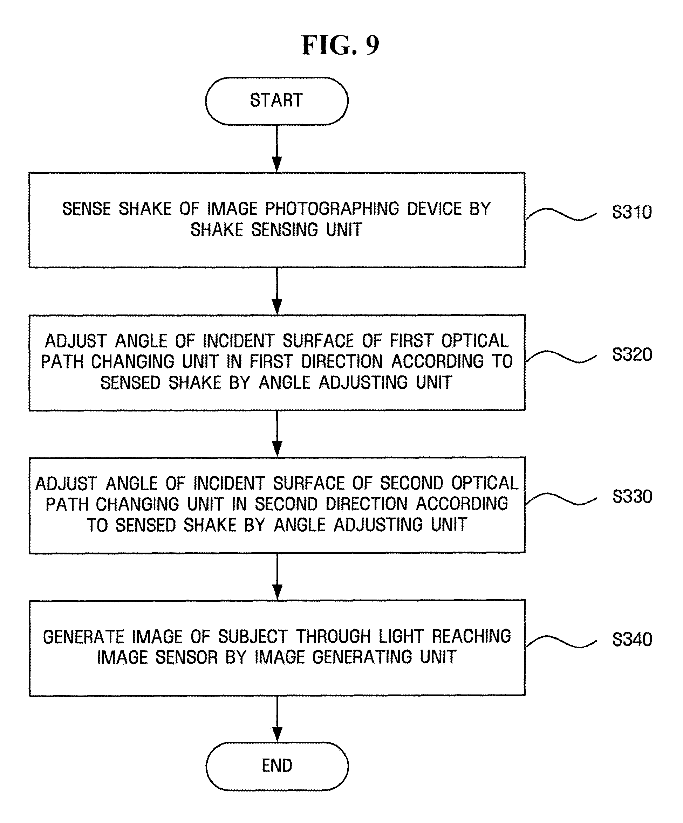

FIG. 9 is a flowchart illustrating a method of correcting a shake of an image photographing device according to the third embodiment of the present invention. Here, this method of FIG. 8 can be understood as a method of operating the apparatus described in FIGS. 4 to 6.

As illustrated in the drawing, the method of correcting a shake of an image photographing device according to the third embodiment of the present invention begins with sensing a shake, occurring in the image photographing device, by the shake sensing unit 110 (S310). Here, as described above, the shake sensing unit 110 includes a gyro sensor, an acceleration sensor, a terrestrial magnetism sensor, an image analysis algorithm and so forth, so that it can sense shake occurrence.

The angle adjusting unit 130 corrects the sensed shake by adjusting an angle of the incident surface of the first optical path changing unit 120 in the first direction (S320) and adjusting an angle of the incident surface of the second optical path changing unit 150 in the second direction (S330). In FIG. 9, by way of example, a description is given of a case where the angle adjusting unit 130 adjusts an angle of the incident surface of the first optical path changing unit 120 in the first direction and adjusts an angle of the incident surface of the second optical path changing unit 150 in the second direction, but the present invention is not limited thereto. For example, the angle adjusting unit 130 may correct the sensed shake by setting one of the incident surfaces of the first and second optical path changing units 120, 150 at a fixed angle and adjusting an angle of the other incident surface.

The image generating unit 140 generates an image of a subject through light reaching the image sensor 141 (S340).

In FIG. 9, the light receiving area, at which light arrives in the image generating unit 140, is positioned in a direction perpendicular to the optical axis incident onto the objective 120a in order that light, the optical path of which is changed twice by the first and second optical path changing units 120, 150, can reach the image sensor 141. When the image generating unit 140 is positioned perpendicular to the optical axis in this way, the thickness of the image photographing device does not increase even when the width of the image generating unit 140 increases. Thus, the shake occurring in the image photographing device may be corrected by providing the image generating unit 140 with the driver 142 to change a position of the image sensor 141. In other words, in FIG. 9, it is also possible to fix one of the first and second optical path changing units 120, 150, adjust an angle of the other unit in the first direction, and change a position of the image sensor 141 in the second direction, thereby correcting the shake occurring in the image photographing device.

Accordingly, it is possible not only to correct the shake components in the first and second directions by means of the first and second optical path changing units 120, 150, but also to correct the shake component in the first direction by means of any one of the first and second optical path changing units 120, 150, and correct the shake component in the second direction by changing a position of the image sensor 141.

The terms "- unit", as used herein, means a software component or a hardware component such as a FPGA (Field Programmable Gate Array) or an ASIC (Application Specific Integrated Circuit), which performs certain tasks, but is not limited to software or hardware. A module may be configured in such a manner as to reside on an addressable storage medium or may be configured in such a manner as to execute one or more processors. Thus, a module may include, by way of example, components such as software components, object-oriented software components, class components and task components, processes, functions, attributes, procedures, subroutines, segments of program codes, drivers, firmware, microcode, circuitry, data, databases, data architectures, tables, arrays, and variables. The functionality provided by the components and modules may be incorporated into fewer components and modules or may be further separated into additional components and modules.

According to the inventive apparatus and method for correcting a shake of an image photographing device, as described above, an optical path of light incident to the image photographing device is appropriately changed through a prism, a mirror and the like, so that an increase in the thickness of the image photographing device can be prevented, and simultaneously an anti-shake function can be implemented.

Although preferred embodiments of the present invention have been described for illustrative purposes, those skilled in the art will appreciate that various modifications, additions and substitutions are possible, without departing from the essential features and the scope and spirit of the invention as disclosed in the accompanying claims. Therefore, it should be appreciated that the embodiments described above are not limitative, but only illustrative.

## Claims

1. An apparatus for correcting a shake of an image photographing device, the apparatus comprising:
a shake sensing unit sensing the shake of the image photographing device which photographs an image of a subject;
a first optical path changing unit changing an optical path of light incident to the image photographing device;
an angle adjusting unit adjusting an angle of an light-incident surface of the first optical path changing unit according to the sensed shake; and
an image generating unit generating the image of the subject through the light, the optical path of which has been changed by the first optical path changing unit.

2. The apparatus of claim 1, wherein the first optical path changing unit comprises at least one of a prism and a mirror.

3. The apparatus of claim 1, wherein the angle adjusting unit comprises at least one of a VCM (Voice Coil Motor), a stepping motor, a DC/AC motor, an ultrasonic motor and an organic/plastic driver for changing the angle of the light-incident surface of the first optical path changing unit.

4. The apparatus of claim 1, wherein the angle adjusting unit adjusts the angle of the light-incident surface of the first optical path changing unit in at least one of a one-dimensional manner and a two-dimensional manner.

5. The apparatus of claim 1, wherein an optical path, to which the optical path of the light incident to the image photographing device is changed by the first optical path changing unit, is determined according to a light receiving area of the image generating unit.

6. An apparatus for correcting a shake of an image photographing device, the apparatus comprising:
a shake sensing unit sensing the shake of the image photographing device which photographs an image of a subject;
a first optical path changing unit changing an optical path of light incident to the image photographing device;
an angle adjusting unit adjusting an angle of a light-incident surface of the first optical path changing unit in a first direction according to the sensed shake; and
an image generating unit generating the image of the subject by changing a position of an area receiving the light, the optical path of which has been changed by the first optical path changing unit, in a second direction.

7. The apparatus of claim 6, wherein the image generating unit comprises:
an image sensor having the area receiving the light; and
a driver changing a position of the image sensor in the second direction according to the sensed shake.

8. An apparatus for correcting a shake of an image photographing device, the apparatus comprising:
a shake sensing unit sensing the shake of the image photographing device which photographs an image of a subject;
a first optical path changing unit changing an optical path of light incident to the image photographing device;
a second optical path changing unit changing an optical path, to which the optical path of the light has been changed by the first optical path changing unit, once again; and
an image generating unit generating the image of the subject through the light, the optical path of which has been changed again by the second optical path changing unit.

9. The apparatus of claim 8, wherein the first optical path changing unit comprises at least one of a prism and a mirror.

10. The apparatus of claim 8, further comprising an angle adjusting unit adjusting an angle of at least one of light-incident surfaces of the first and second optical path changing units.

11. The apparatus of claim 10, wherein the angle adjusting unit adjusts angles of the light-incident surfaces of the first and second optical path changing units in different directions.

12. The apparatus of claim 10, wherein an optical path, to which the optical path of the light is changed by the second optical path changing unit, is determined according to a light receiving area of the image generating unit.

13. The apparatus of claim 8, wherein the image generating unit comprises:
an image sensor having the light receiving area; and
a driver changing a position of the image sensor according to the sensed shake.

14. The apparatus of claim 13, wherein the angle adjusting unit adjusts the angle of at least one of the light-incident surfaces of the first and second optical path changing units in a first direction, and the driver changes the position of the image sensor in a second direction.

15. A method of correcting a shake of an image photographing device, the method comprising:
sensing the shake of the image photographing device which photographs an image of a subject;
changing an optical path of light incident to the image photographing device;
when the optical path of the light is changed, adjusting an angle of an optical path, to which the optical path of the light is changed, according to the sensed shake; and
generating the image of the subject through the light, the optical path of which has been changed.

16. The method of claim 15, wherein the changing the optical path of the light comprises changing the optical path of the light by using at least one of a prism and a mirror.

17. The method of claim 15, wherein the adjusting the angle of the optical path comprises adjusting the angle of the optical path by using at least one of a VCM (Voice Coil Motor), a stepping motor, a DC/AC motor, an ultrasonic motor and an organic/plastic driver for changing an angle of the light-incident surface.

18. The method of claim 15, wherein the adjusting the angle of the optical path comprises adjusting the angle of the light-incident surface in at least one of a one-dimensional direction and a two-dimensional direction.

19. The method of claim 15, wherein the optical path, to which the optical path of the light incident to the image photographing device is changed, is determined according to an area at which the light arrives for generating the image of the subject.

20. A method of correcting a shake of an image photographing device, the method comprising:
sensing the shake of the image photographing device which photographs an image of a subject;
changing an optical path of light incident to the image photographing device;
changing the changed optical path of the light once again; and
generating the image of the subject through the light, the optical path of which has been changed again.

21. The method of claim 20, wherein each of the changing the optical path of the light and the changing the optical path of the light once again comprises changing the optical path of the light by using at least one of a prism and a mirror.

22. The method of claim 21, wherein each of the changing the optical path of the light and the changing the optical path of the light once again comprises adjusting an angle of a light-incident surface of at least one of the prism and the mirror.

23. The method of claim 22, wherein the adjusting the angle of the light-incident surface comprises adjusting the angle of the light-incident surface in a first direction when the optical path of the light is changed or changed again.

24. The method of claim 23, wherein the adjusting the angle of the light-incident surface comprises:
adjusting the angle of the light-incident surface in the first direction when the optical path of the light is changed; and
adjusting the angle of the light-incident surface in a second direction when the optical path of the light is changed again.

25. The method of claim 20, wherein the generating the image of the subject comprises changing a position of an image sensor, which has a light receiving area, according to the sensed shake.
